# EUROPÄISCHE PATENTSCHRIFT

(11) **EP 2 528 769 B1**
(45) Veröffentlichungstag und Bekanntmachung des Hinweises auf die Patenterteilung: **07.03.2018**
(21) Anmeldenummer: 10794888.7
(22) Anmeldetag: 10.12.2010
(51) Int. Cl.: B60L 11/12, B60W 20/11, H02J 3/32, H02J 3/38, H02J 7/35, B60L 11/18, B60W 10/06, B60W 10/08

(54) **VERFAHREN ZUR REGELUNG DES LADEZUSTANDES EINES ELEKTRISCHEN ENERGIESPEICHERS**
METHOD FOR CONTROLLING THE STATE OF CHARGE OF AN ELECTRICAL ENERGY STORE
PROCÉDÉ DE RÉGULATION DE L'ÉTAT DE CHARGE D'UN ACCUMULATEUR D'ÉNERGIE ÉLECTRIQUE

(30) Priorität: 27.01.2010 DE 102010005837
(43) Veröffentlichungstag der Anmeldung: 05.12.2012
(73) Patentinhaber: Bayerische Motoren Werke Aktiengesellschaft, 80809 München (DE)
(72) Erfinder: HUMMEL, Holger, 80807 München (DE); MUMELTER, Georg, 80807 München (DE); HIRSCH, Ronny, 80339 München (DE)
(86) Internationale Anmeldenummer: PCT/EP2010/007551
(87) Internationale Veröffentlichungsnummer: WO 2011/091831

(56) Entgegenhaltungen:
- DE-A1-102006 001 201
- US-B1- 6 484 833

## Beschreibung

Die vorliegende Erfindung betrifft ein Verfahren zur Regelung des Ladezustands eines elektrischen Energiespeichers gemäß dem Oberbegriff des Patentanspruches 1.

Zum technischen Hintergrund der vorliegenden Erfindung zählt die US 6484833 B1, die ein Hybridfahrzeug mit einem Überwachungssystem zur Überwachung des Ladezustands der Batterie beschreibt. Hybridfahrzeuge zeichnen sich dadurch aus, dass in Schubphasen des Fahrzeugs kinetische Energie mittels einer elektrischen Maschine rekuperiert, d. h. in elektrische Energie umgewandelt und in einem Energiespeicher gespeichert wird. Die gespeicherte Energie kann in Antriebsphasen des Fahrzeugs zum Betreiben der elektrischen Maschine als Elektromotor und/oder zur Versorgung der diversen elektrischen Fahrzeugsysteme verwendet werden.

Aufgabe der Erfindung ist es, den Ladezustand (SoC bzw. "State of Charge") des elektrischen Energiespeichers so zu regeln, dass sich eine hohe Lebensdauer des Energiespeichers ergibt.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Verfahren zur Regelung des Ladezustands eines elektrischen Energiespeichers, insbesondere einer Batterie, eines Hybridfahrzeugs, das einen Verbrennungsmotor und eine elektrische Maschine aufweist. Der elektrische Energiespeicher wird in einem "Arbeits-Ladezustandsbereich" betrieben, der innerhalb des theoretisch möglichen Ladezustandsbereichs des Energiespeichers liegt. Theoretisch kann der Energiespeicher einen Ladezustand im Bereich zwischen 0% (Energiespeicher leer) und 100% (Energiespeicher voll aufgeladen) einnehmen. Versuche haben gezeigt, dass der Ladezustand des Energiespeichers im Betrieb möglichst nicht unterhalb einer vorgegebenen unteren Grenze und auch möglichst nicht oberhalb einer vorgegebenen oberen Grenze liegen sollte, da dies ansonsten stark zu Lasten der Lebensdauer des Energiespeichers gehen würde. Der "Arbeits-Ladezustandsbereich" kann beispielsweise definiert sein als der Ladezustandsbereich zwischen 30% und 80% des maximalen Ladezustands.

Der Kern der Erfindung besteht darin, dass der Arbeits-Ladezustandsbereich funktional in vier Teilbereiche unterteilt ist, die sich wie folgt charakterisieren lassen:
- In einem ersten Teilbereich (SoC niedrig) des Arbeits-Ladezustandsbereichs wird die Batterie von der elektrischen Maschine des Hybridfahrzeugs geladen. Die elektrische Maschine arbeitet also generatorisch und wird dabei von dem Verbrennungsmotor des Hybridfahrzeugs angetrieben.
- In einem zweiten Teilbereich (SoC unteres Optimum) des Arbeits-Ladezustandsbereichs wird die Batterie weder geladen noch entladen. Die elektrische Maschine arbeitet auch in diesem Teilbereich generatorisch und wird von dem Verbrennungsmotor angetrieben. Die von der elektrischen Maschine erzeugte elektrische Leistung ist jedoch gerade so groß, dass sie das Bordnetz des Hybridfahrzeugs mit Strom versorgt.
- In einem dritten Teilbereich (SoC oberes Optimum) des Arbeits-Ladezustandsbereichs wird die Batterie entladen, wobei die Batterie das Bordnetz des Hybridfahrzeugs mit Strom versorgt. Die elektrische Maschine läuft in dem dritten Teilbereich des Arbeits- Ladezustandsbereichs passiv mit. "Passiv mitlaufen" bedeutet, dass sie weder elektrische Leistung aufnimmt, noch elektrische Leistung abgibt. In diesem Bereich wird die Rekuperationsenergie effizienter genutzt, in dem die vorhandene rekuperierte Speicherenergie für die Versorgung der im Fahrzeug vorhandenen elektrischen Verbrauchern genutzt wird.
- Einem vierten Teilbereich (SoC hoch) des Arbeits-Ladezustandsbereichs wird die Batterie entladen. In diesem Teilbereich arbeitet die elektrische Maschine des Hybridfahrzeugs elektromotorisch und wird von der Batterie mit Strom versorgt.

Nach einer Weiterbildung der Erfindung weist der Arbeits-Ladezustandsbereich eine untere Grenze auf, die im Bereich zwischen 25% und 35%, insbesondere bei etwa 30% des maximalen Ladezustands liegt. Die obere Grenze des Ladezustandsbereichs kann im Bereich zwischen 75% und 85%, insbesondere bei etwa 80% des maximalen Ladezustands liegen.

Der erste Teilbereich des Arbeits-Ladezustandsbereichs ist durch die untere Grenze des Arbeits-Ladezustandsbereichs und eine erste Teilbereichsgrenze definiert. Die erste Teilbereichsgrenze kann z. B. im Bereich zwischen 50% und 55% des maximalen Ladezustands des Energiespeichers liegen. Der erste Teilbereich kann somit z B. zwischen 30% und 55% des maximalen Ladezustands des Energiespeichers liegen.

Der zweite Teilbereich des Arbeits-Ladezustandsbereichs ist durch die erste Teilbereichsgrenze und eine zweite Teilbereichsgrenze definiert, die z. B. bei 60% liegen kann.

Der dritte Teilbereich des Arbeits-Ladezustandsbereichs ist durch die zweite Teilbereichsgrenze und eine dritte Teilbereichsgrenze definiert, die z. B. bei 65% des maximalen Ladezustands des Energiespeichers liegen kann.

Der vierte Teilbereich des Arbeits-Ladezustandsbereichs ist durch die dritte Teilbereichsgrenze und die obere Grenze des Arbeits-Ladezustandsbereichs definiert. Der vierte Teilbereich kann somit beispielsweise zwischen 65% und 80% des maximalen Ladezustands des Energiespeichers liegen. Im ersten Teilbereich erfolgt somit eine "Lastpunkanhebung" des Verbrennungsmotors, was bedeutet, dass die elektrische Maschine generatorisch arbeitet und eine zusätzliche Last für den Verbrennungsmotor darstellt. Der vierte Teilbereich hingegen ist durch eine Lastpunktabsenkung gekennzeichnet, was bedeutet, dass die elektrische Maschine elektromotorisch arbeitet und den Fahrzeugantrieb bzw. den Verbrennungsmotor unterstützt.

Nach einer Weiterbildung der Erfindung sind die Übergänge zwischen den einzelnen Teilbereichen des Arbeits-Ladezustandsbereichs (im mathematischen Sinne) stetig. Sie können z. B. durch Rampenfunktionen definiert sein. Anders ausgedrückt weist das Lademoment der elektrischen Maschine über dem Ladezustand einen stetigen Verlauf auf. Der Verlauf muss aber nicht notwendigerweise stetig differenzierbar sein. Die Ableitung des Lademoments der elektrischen Maschine nach dem Ladezustand kann vielmehr einen unstetigen, z.B. abschnittsweise konstanten Verlauf aufweisen.

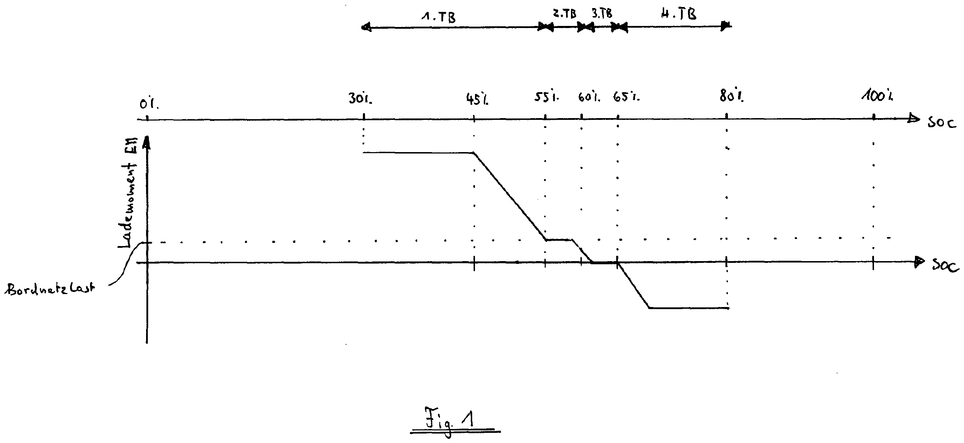

Das in Figur 1 gezeigte Diagramm verdeutlicht das erfindungsgemäße Verfahren zur Regelung des Ladezustands. Auf der Abszisse ist der Ladezustand (SoC, "State of Charge") aufgetragen. Der theoretisch mögliche Ladezustandsbereich einer Batterie liegt zwischen 0 und 100%. Üblicherweise wird ein Arbeitsladezustandsbereich definiert, der den untersten und den obersten Bereich des theoretisch möglichen Ladezustandsbereichs ausblendet. Der Arbeits-Ladezustandsbereich kann beispielsweise zwischen 30% und 80% liegen.

Gemäß der Erfindung wird der Arbeits-Ladezustandsbereich in vier Teilbereiche 1. TB, 2. TB, 3. TB und 4. TB untergliedert. Der erste Teilbereich (1. TB) liegt bei dem hier gezeigten Ausführungsbeispiel zwischen der unteren Grenze (30%) des Arbeits-Ladezustandsbereichs und einer ersten Teilbereichsgrenze, die hier auf einen Wert von 55% festgesetzt ist. In dem ersten Teilbereich arbeitet die elektrische Maschine des Hybridfahrzeugs generatorisch, was schon daran ersichtlich ist, dass das Lademoment der elektrischen Maschine einen positiven Wert annimmt. Die elektrische Maschine wird dabei vom Verbrennungsmotor des Hybridfahrzeugs angetrieben. In einem oberen Ladezustandsbereich des ersten Teilbereichs, der hier durch den Bereich zwischen 45% und 55% definiert ist, ist eine "Rampenfunktion" vorgesehen, d. h. das Lademoment der elektrischen Maschine wird mit zunehmendem Ladezustand der Batterie allmählich, z. B. linear heruntergefahren.

In dem zweiten Teilbereich (2. TB) des Arbeits-Ladezustands arbeitet die elektrische Maschine ebenfalls generatorisch, wobei sie weiterhin von dem Verbrennungsmotor angetrieben wird. Die elektrische Maschine erzeugt in dem zweiten Teilbereich des Arbeits-Ladezustandsbereichs aber im Wesentlichen nur noch die Bordnetzlast, d. h. die Leistung, die zur Versorgung des Bordnetzes des Hybridfahrzeugs erforderlich ist. Der "Übergangsbereich" zwischen dem zweiten Teilbereich (2. TB) und dem dritten Teilbereich (3. TB) ist ebenfalls durch eine Übergangsfunktion gebildet. Auch diese Übergangsfunktion ist hier als Rampenfunktion gewählt. In dem dritten Teilbereich (3. TB) des Arbeits-Ladezustandsbereichs versorgt die Batterie das Bordnetz. Die elektrische Maschine läuft dabei im Wesentlichen passiv mit, d. h. sie nimmt weder Leistung auf noch gibt sie Leistung ab.

Der Vorteil der sich gegenüber herkömmlichen Regelungen oder dem 2. Teilbereich ergibt ist eine effizientere Nutzung der rekuperierten Energie. Eine Erhöhung des Ladezustands ergibt sich in diesem Bereich annähernd nur durch Rekuperation. Durch die Regelstrategie im 3. Teilbereich wird vermieden, dass die rekuperierte Energie sofort in kurzer Zeit über eine Lastpunktabsenkung an der E-Maschine in mechanische Energie umgesetzt wird, während die Versorgung des Bordnetzes über einem längeren Zeitraum wieder über einen Teil der Verbrennungsmotorleistung und die E-Maschine notwendig wird. Dies bedeutet im Ergebnis eine verbrauchseffizientere Nutzung der rekuperierten Energie proportional zum Faktor 1 / (2*relativer Wirkungsgrad-E-Maschine).

Im vierten Teilbereich (4. TB) des Arbeits-Ladezustandsbereichs wird die Batterie entladen. Die elektrische Maschine arbeitet dabei elektromotorisch und wird von der Batterie mit Strom versorgt. In einem Übergangsbereich vom dritten Teilbereich zum vierten Teilbereich kann ebenfalls eine Übergangsfunktion bzw. eine Rampenfunktion vorgesehen sein. Das Lademoment der elektrischen Maschine ist, da die elektrische Maschine hier elektromotorisch arbeitet, entsprechend negativ. Man spricht dabei auch von einer Lastpunktabsenkung des Verbrennungsmotors, da die elektrische Maschine den Verbrennungsmotor drehmomentmäßig unterstützt.

## Patentansprüche

1. Verfahren zur Regelung des Ladezustands (SoC) eines elektrischen Energiespeichers, insbesondere einer Batterie, eines Hybridfahrzeugs, das einen Verbrennungsmotor und eine elektrische Maschine aufweist, wobei die Batterie in einem Arbeits-Ladezustandsbereich (30%, 80%) betrieben wird, der vollständig innerhalb des theoretisch möglichen Ladezustandsbereichs (0%, 100%) der Batterie liegt, **dadurch gekennzeichnet, dass** die Batterie in
- einem ersten Teilbereich (1. TB) des Arbeits-Ladezustandsbereichs von der elektrischen Maschine geladen wird, wobei die elektrische Maschine generatorisch arbeitet und von dem Verbrennungsmotor angetrieben wird, wobei der erste Teilbereich (1. TB) des Arbeits-Ladezustandsbereichs definiert ist durch die untere Grenze (30%) und eine erste Teilbereichsgrenze,
- einem zweiten Teilbereich (2. TB) des Arbeits-Ladezustandsbereichs weder geladen noch entladen wird, wobei die elektrische Maschine generatorisch arbeitet und von dem Verbrennungsmotor angetrieben wird und dabei lediglich ein Bordnetz des Hybridfahrzeugs mit Strom versorgt, wobei der zweite Teilbereich (2. TB) des Arbeits-Ladezustandsbereichs definiert ist durch die erste Teilbereichsgrenze und eine zweite Teilbereichsgrenze,
- einem dritten Teilbereich (3. TB) des Arbeits-Ladezustandsbereichs entladen wird und dabei das Bordnetz mit Strom versorgt, wobei die elektrische Maschine passiv mitläuft, derart, dass die elektrische Maschine weder elektrische Leistung aufnimmt, noch elektrische Leistung abgibt, wobei der dritte Teilbereich (3. TB) des Arbeits-Ladezustandsbereichs definiert ist durch die zweite Teilbereichsgrenze und eine dritte Teilbereichsgrenze und
- einem vierten Teilbereich (4. TB) des. Arbeits-Ladezustandsbereichs entladen wird und dabei die elektrische Maschine, welche elektromotorisch arbeitet, mit Strom versorgt, wobei der vierte Teilbereich (4. TB) des Arbeits-Ladezustandsbereichs definiert ist durch die dritte Teilbereichsgrenze und die obere Grenze des Arbeits-Ladezustandsbereichs.

2. Verfahren nach Anspruch 1, **dadurch gekennzeichnet, dass** der Arbeits-Ladezustandsbereich eine untere Grenze aufweist, die im Bereich zwischen 25% und 35%, insbesondere bei etwa 30% des maximalen Ladezustands liegt.

3. Verfahren nach Anspruch 1, **dadurch gekennzeichnet, dass** der Arbeits-Ladezustandsbereich eine obere Grenze aufweist, die im Bereich zwischen 75% und 85%, insbesondere bei etwa 80% des maximalen Ladezustands liegt.

4. Verfahren nach Anspruch 1, **dadurch gekennzeichnet, dass** die erste Teilbereichsgrenze im Bereich zwischen 50% und 55% des maximalen Ladezustands liegt.

5. Verfahren nach Anspruch 1, **dadurch gekennzeichnet, dass** die zweite Teilbereichsgrenze bei etwa 60% des maximalen Ladezustands liegt.

6. Verfahren nach Anspruch 1, **dadurch gekennzeichnet, dass** die dritte Teilbereichsgrenze bei circa 65% des maximalen Ladezustands liegt.

7. Verfahren nach einem der vorangehenden Ansprüche, **dadurch gekennzeichnet, dass** die Funktion des Lademoments der elektrischen Maschine über dem Ladezustand (SoC) einen stetigen Verlauf aufweist.

8. Verfahren nach Anspruch 7, **dadurch gekennzeichnet, dass** die Ableitung der Funktion des Lademoments der elektrischen Maschine über dem Ladezustand nach dem Ladezustand einen unstetigen Verlaufe aufweist, insbesondere einen abschnittsweise konstanten Verlauf.

## Claims

1. A method for controlling the state of charge (SoC) of an electrical energy accumulator, especially a battery, of a hybrid vehicle which has an internal combustion engine and an electric machine, wherein the battery is operated in a working state-of-charge range (30%, 80%) which lies completely within the theoretically possible state-of-charge range (0%, 100%) of the battery, **characterised in that** the battery, in
- a first sub-range (1. TB) of the working state-of-charge range is charged by the electric machine, the electric machine operating as a generator and being driven by the internal combustion engine, the first sub-range (1. TB) of the working state-of-charge range being defined by the lower limit (30%) and a first sub-range limit,
- a second sub-range (2. TB) of the working state-of-charge range is neither charged nor discharged, the electric machine operating as a generator and being driven by the internal combustion engine and in so doing supplying current merely to a vehicle electrical system of the hybrid vehicle, the second sub-range (2. TB) of the working state-of-charge range being defined by the first sub-range limit and a second sub-range limit,
- a third sub-range (3. TB) of the working state-of-charge range is discharged and in so doing supplies current to the vehicle electrical system, with the electric machine running along passively in such a way that the electric machine neither receives electric power nor delivers electric power, the third sub-range (3. TB) of the working state-of-charge range being defined by the second sub-range limit and a third sub-range limit, and in
- a fourth sub-range (4. TB) of the working state-of-charge range is discharged and in so doing supplies current to the electric machine, which is operating as an electric motor, the fourth sub-range (4. TB) of the working state-of-charge range being defined by the third sub-range limit and the upper limit of the working state-of-charge range.

2. A method according to Claim 1, **characterised in that** the working state-of-charge range has a lower limit which lies in the range between 25% and 35%, especially at about 30%, of the maximum state of charge.

3. A method according to Claim 1, **characterised in that** the working state-of-charge range has an upper limit which lies in the range between 75% and 85%, especially at about 80%, of the maximum state of charge.

4. A method according to Claim 1, **characterised in that** the first sub-range limit lies in the range between 50% and 55% of the maximum state of charge.

5. A method according to Claim 1, **characterised in that** the second sub-range limit lies at about 60% of the maximum state of charge.

6. A method according to Claim 1, **characterised in that** the third sub-range limit lies at approximately 65% of the maximum state of charge.

7. A method according to one of the preceding claims, **characterised in that** the function of the charging torque of the electric machine over the state of charge (SoC) has a constant course.

8. A method according to Claim 7, **characterised in that** the differentiation of the function of the charging torque of the electric machine over the state of charge after the state of charge has a non-constant course, especially a course which is constant in portions.

## Revendications

1. Procédé de régulation de l'état de charge (SoC) d'un accumulateur d'énergie électrique en particulier d'une batterie d'un véhicule hybride qui comporte un moteur à combustion interne et une machine électrique, la batterie fonctionnant dans une plage d'état de charge de travail (30%, 80%) située totalement dans la plage d'état de charge possible (0%, 100%) de celle-ci,
caractérisé que ce que
- dans une première plage partielle (1.TB) de la plage d'état de charge de travail, la batterie est chargée par la machine électrique, la machine électrique fonctionnant en tant que générateur et étant entraînée par le moteur à combustion interne, la première plage partielle (1.TB) de la plage d'état de charge de travail étant définie par la limite inférieure (30%) et par une première limite de plage partielle,
- dans une seconde plage partielle (2.TB) de la plage d'état de charge de travail la batterie n'est ni chargée ni déchargée, la machine électrique fonctionnant en tant que générateur et étant entraînée par le moteur à combustion interne, et seul le réseau embarqué du véhicule hybride étant alimenté en courant, la seconde plage partielle (2.TB) de la plage d'état de charge de travail étant définie par la première limite de plage partielle et par une seconde limite de plage partielle,
- dans une troisième plage partielle (3.TB) de la plage d'état de charge de travail la batterie est déchargée, et, alimente le réseau embarqué en courant, le moteur électrique fonctionnant de façon passive de sorte qu'il ne reçoive ni ne délivre de puissance électrique, la troisième plage partielle (3.TB) de la plage d'état de charge de travail étant définie par la seconde limite de plage partielle et par une troisième limite de plage partielle, et
- dans une quatrième plage partielle (4.TB) de la plage d'état de charge de travail, la batterie est déchargée, et alimente en courant la machine électrique qui fonctionne en tant que moteur électrique, la quatrième plage partielle (4.TB) de la plage d'état de charge de travail étant définie par la troisième limite de plage partielle et par la limite supérieure de la plage d'état de charge de travail.

2. Procédé conforme à la revendication 1,
**caractérisé en ce que**
la plage d'état de charge de travail a une limite intérieure qui est située dans la plage comprise entre 25% et 35%, et en particulier égale à environ 30% de l'état de charge maximum.

3. Procédé conforme à la revendication 1,
**caractérisé en ce que**
la plage d'état de charge de travail a une limite supérieure qui est située dans la plage comprise entre 75% et 85%, et en particulier égale à environ 80% de l'état de charge maximum.

4. Procédé conforme à la revendication 1,
**caractérisé en ce que**
la première limite de plage partielle est située dans la plage comprise entre 50% et 55% de l'état de charge maximum.

5. Procédé conforme à la revendication 1,
**caractérisé en ce que**
la seconde limite de plage partielle est égale à environ 60% de l'état de charge maximum.

6. Procédé conforme à la revendication 1,
**caractérisé en ce que**
la troisième limite de plage partielle est égale à environ 65% de l'état de charge maximum.

7. Procédé conforme à l'une des revendications précédentes,
**caractérisé en ce que**
la fonction représentant les variations du couple de charge de la machine électrique par rapport à l'état de charge (SoC) a un tracé continu.

8. Procédé conforme à la revendication 7,
**caractérisé en ce que**
la dérivée en fonction de l'état de charge de la fonction représentant les variations du couple de charge de la machine électrique par rapport à l'état de charge a un tracé non continu, en particulier un tracé constant par segments.
